# EUROPEAN PATENT APPLICATION

(11) **EP 1 806 942 A1**
(43) Date of publication of application: **11.07.2007**
(21) Application number: 06290045.1
(22) Date of filing: 05.01.2006
(51) Int. Cl.: H04Q 7/38

(54) **Method of semidynamic centralized interference coordination for cellular systems**

(71) Applicant: Alcatel Lucent, 75008 Paris (FR)
(72) Inventor: Münzner, Roland, Dr., 73266 Bissingen/Teck (DE); Cesar, Bozo, 70439 Stuttgart (DE)
(74) Representative: Kohler Schmid Möbus

(57) **Abstract**

A method for operating a radio access network (RAN), wherein the RAN comprises a plurality of base stations (BS) and a base station controller (BSC), wherein the BSC allocates radio resources (space, time, frequency, energy) of a resource domain, and wherein each base station (BS) may handle within a corresponding base station area (BSA) a plurality of subscriber stations (SS), is characterized in that each BSA is statically divided into a plurality of spatial subsectors (BEA), that a subset of the time-frequency domain of the resource domain is allocated to each of the subsectors, that the BSs collect traffic information for each subsector belonging to their respective BSA, the traffic information comprising interference conflict scenarios and traffic load, that the BSs summarize the traffic information for each subsector belonging to their respective BSA, that the BSs provide the BSC with said summarized traffic information for each subsector belonging to their respective BSA regularly, in particular periodically, that the BSC analyses the summarized traffic information for each subsector and re-allocates subsets of the time-frequency domain to the subsectors regularly, in particular periodically, in order to minimize interference between BSs, and that each BS comprises an independent local scheduling entity (ILSE) allocating radio resources of a subset of the radio resource domain, allocated to a given subsector at a given instant in time, to SSs within this subsector. The method allows a large throughput for each base station at a low management effort within the RAN.

## Description

### Background of the invention

The invention relates to a method for operating a radio access network (RAN), wherein the RAN comprises a plurality of base stations (BS) and a base station controller (BSC),
wherein the BSC allocates radio resources (space, time, frequency, energy) of a resource domain,
and wherein each base station (BS) may handle within a corresponding base station area (BSA) a plurality of subscriber stations (SS).

Such a method is known from cellular systems for mobile communication as GSM (Global System for Mobile Communications) and UMTS (Universal Mobile Telecommunications System).

Radio access networks (RANs), such as a mobile phone networks, allow a plurality of subscriber stations (SSs), such as mobile phones, to communicate with each other in a wireless way. In the RAN, the subscriber stations do not communicate directly with each other, but via interconnected base stations (BSs). Each base station handles a plurality of subscriber stations which are within a corresponding base station area (BSA).

In general, a RAN can only access a limited interval of radio frequencies, and at the same time, should be able to handle a large number of subscriber stations. For this reason, it is necessary to use identical communication frequencies at the same time with a plurality of subscriber stations and base stations. As a result, when subscriber stations or base stations using the same communication frequencies at the same time are close to each other, the transmissions may interfere and the communication may be disturbed. Due to the bursty nature of traffic in packet access networks, such type of networks suffer from a even stronger performance degradation due to interference.

To overcome this problem, there are three concepts in the state of the art, namely static interference coordination (also called static resource allocation or static channel allocation), dynamic interference coordination (also called dynamic resource allocation or dynamic channel allocation) and random resource allocation (see e.g. J. Zander, "Radio resource management in future wireless networks: requirements and limitations", IEEE Communications Magazine, Volume: 35 , Issue: 8, Aug. 1997 Pages:30 - 36 and references therein).

Static interference coordination uses a constant distribution of orthogonal subsets of scheduling resources (time, frequency, space) among potentially interfering base stations. The rules of the constant distribution, which should guarantee a maximum of interference avoidance, are determined in advance by statistical averaging methods taking into account typical traffic. As a disadvantage of the strong restrictions on resource management of each BS, the communication throughput of a base station area is rather limited.

Dynamic interference coordination, in contrast, updates the distribution of scheduling resources among the base stations for every transmission time slot, taking into account the needs of all subscriber stations. This updating allows to take into account the actual current traffic situation, and the throughput for a base station can be increased when necessary. However, dynamic interference management requires a huge messaging overhead between the base stations and a huge computing effort to calculate the resource distribution schemes.

Random resource allocation employs periodically up-dated pseudo-random allocations of sub-sets of the scheduling resource independently at each potentially interfering base station. Avoiding a detailed resource planning as required in the case of static resource allocation, it provides for an averaging of interference between base station areas. Recent examples of this scheme can be found in the standard for wireless access systems IEEE 802.16-2004. Being an attractive solution for systems with a single and fixed antenna pattern for each base station area, random resource allocation suffers from strong variations in the interference level in systems that are employing adaptive antenna array technology, where the dynamic adaptation of beam patterns with usually high directivity lead to strong avoidance as well as strong hits in the interference between base station areas (see e.g. Riccardo Veronesi, Velio Tralli, Jens Zander, Michele Zorzi, "Distributed dynamic resource allocation with power shaping for multicell SDMA packet access networks", Proceedings IEEE Wireless Communications and Networking Conference, March 2004).

### Object of the invention

It is therefore the object of the invention to provide a method for operating a RAN that can provide a large throughput for each base station at a low management effort, in particular as far as messaging overhead and computing is concerned.

### Short description of the invention

This object is achieved, in accordance with the invention, by a method as described in the beginning, characterized in that each BSA is statically divided into a plurality of spatial subsectors,
that a subset of the time-frequency domain of the resource domain is allocated to each of the subsectors,
that the BSs collect traffic information for each subsector belonging to their respective BSA, the traffic information comprising interference conflict scenarios and traffic load,
that the BSs summarize the traffic information for each subsector belonging to their respective BSA,
that the BSs provide the BSC with said summarized traffic information for each subsector belonging to their respective BSA regularly, in particular periodically, that the BSC analyses the summarized traffic information for each subsector and re-allocates subsets of the time-frequency domain to the subsectors regularly, in particular periodically, in order to minimize interference between BSs,
and that each BS comprises an independent local scheduling entity (ILSE) allocating radio resources of a subset of the radio resource domain, allocated to a given subsector at a given instant in time, to SSs within this subsector.

With the inventive method, a semi-dynamic interference coordination is achieved. In order to be able to take into account changing traffic situations, the radio resources are reallocated regularly. In order to reduce the computation efforts, subsets of the time-frequency-domain are allocated to subsectors of base station areas. Subsectors with high traffic receive a larger part of the available time-frequency-domain than subsectors with low traffic. The traffic information of a subsector is summarized for reallocation purposes. Within each subsector, the allocated subset of the time-frequency-domain is distributed locally to the SSs by the ILSE. As a result, by allocation according to the actual traffic needs, high throughput is available, and computation effort is kept low by using summarized data. Interference is reduced by limiting potential interference to neighbouring subsectors instead of complete neighbouring base station areas.

In a highly preferred variant of the inventive method, subsets of the time-frequency domain, which are allocated to neighbouring subsectors of different BSAs, do not overlap. In order to reduce interference between neighbouring base stations, the corresponding base station areas are divided into subsectors. In accordance with the invention, it is sufficient that the subsets of the time-frequency domain of neighbouring subsectors do not overlap to minimize interference between the base stations. In particular, it is not necessary that the total subsets of the base stations do not overlap. In contrast, in accordance with the invention, identical subsets of the time-frequency domain may be allocated to neighbouring (or even all) base stations, increasing the possible throughput. Note that individual subsectors are preferably addressed by directed transmissions of special antenna patterns or adaptive beamforming systems.

In another preferred variant of the inventive method, all BSAs have a basically equal geometry, in particular with a hexagonal shape. The hexagonal shape allows a very efficient covering of large areas with BSAs.

In a further development of this variant, all BSAs have substantially a geometrically equal division in subsectors. This simplifies the administration of the subsectors and the addressing of the subsectors by transmitters.

A preferred variant of the inventive method is characterized in that a BSA comprises a central subsector and a number N of outer subsectors, with N being at least as large as double the number of other BSAs having a common borderline with the BSA. In this variant, a subsector is established for each common borderline, and, in addition, a subsector is established for each triplepoint of subsectors. This allows very efficient interference management. Note that in a simpler alternative, N may be chosen as the number of other BSAs having a common borderline only.

Also within the scope of the invention is a RAN apparatus, comprising a BSC and a plurality of BSs, characterized in that the RAN apparatus is adapted to perform an inventive method as described above. Typically, each BS comprises means for traffic information collection and summarization, and an ILSE means. The BSC typically comprises means for analysing the traffic information and for determining and allocating the subsets to the subsectors of the BSs.

In a preferred embodiment of the inventive RAN apparatus, each BS comprises a plurality of antenna patterns, with each antenna pattern dedicated to address one or several subsectors of the respective BSA of the BS, in particular wherein each antenna pattern is dedicated to address one subsector. The dedicated antenna patterns minimize interference between the subsectors of one BS.

In an equally preferred embodiment, each BS comprises an adaptive beamforming system for generating adaptively formed beampatterns, wherein for each beampattern a one-to-one correspondence is defined with one of the subsectors of the BSA. The adaptively formed beam patterns also reduce interference between the subsectors of a BS.

Finally, in a preferred embodiment, each BS operates an OFDMA (orthogonal frequency division multiple access) or FDMA air interface. This allows the concurrent use of different communication frequencies, and thus a high data throughput at the base stations.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows in a scheme of a radio access network for use with the inventive method;
- Fig. 2: shows schematically an example of BSA- and subsector segmentation in accordance with the invention;
- Fig. 3: shows schematically an example TDD frame in accordance with the invention.

The invention improves the interference coordination in a RAN. In the state of the art, static and dynamic interference coordination are known.

Dynamic interference coordination generates a large amount of signalling overhead to indicate the individual traffic and radio resource management decision at each of the base stations, a huge computational effort to derive an optimised assignment of resources at the central control unit (base station controller), and finally a further amount of signalling overhead to communicate the specific resource allocation that should be applied at a given moment in time to all the base stations of the radio access network.

Static interference coordination on the other hand suffers from strong restrictions, imposed on the local radio resource management of each access point or base station, due to the predefined pattern of resource allocation in order to guarantee interference mitigation through a maximum of orthogonality in space, time and frequency between the individual transmissions of the concerned base stations or access points.

The invention proposes a solution that combines the virtues of both schemes - the small amount of required signalling as well as sufficient flexibility for the radio resource management within each the individual cells (base stations) by using a semi-dynamic solution for interference cancellation which is especially suitable for OFDMA based air interfaces with beamforming capabilities.

Semi-dynamic interference coordination in a cellular system, based on an OFDMA type air interface and using beamforming technology, is realised through the regular update at low rates of a pre-defined radio resource allocation framework which has to be employed by each of the base stations (BS) in the given radio access network (RAN). Thereby two technologies are inventively combined to increase the throughput for each of the individual cells or base stations.

On the one hand, each base station area is sub-divided into subsectors along the three degrees of freedom for orthogonal transmission provided by the system - time, frequency and space. Radio resource management at the BSs serving each of the individual cells of the RAN then has available only a sub-space of the 3-dimensional resource for scheduling. The sub-space allocations thereby are pre-defined in such a way that maximum orthogonality is guaranteed for the transmissions of different BSs which guarantees an optimum level of interference mitigation for all cells simultaneously. This principle can be called static interference coordination.

In order to allow an adaptation to variable load and subscriber distributions throughout the individual cells, the principles of dynamic interference cancellation are partly incorporated into the approach: Basis is a fixed subdivision of each cell (or base station area) in spatial 'sub-sectors' - which are addressed, typically, through dedicated antenna patterns getting their angular extension from beamforming technology and their radial extension from power control - each of which is assigned to a dedicated region or subset of the frequency-time radio resource for each of the individual BSs. The assignment of the frequency time radio resource to the spatial sub-sectors at the individual BSs thereby is not fixed, but is regularly updated by a central base station controller (BSC) of the RAN on basis of information on traffic load and radio link quality for each of the spatial sub-sectors at each of the BSs.

In contrast to a fully dynamic interference coordination, where information on spatial location, radio link quality and traffic for each individual subscriber has to be continuously provided by each BS to a central interference coordination unit at the BSC and the BSC has to provide scheduling for each individual subscriber to all BSs, the semi-dynamic solution restricts the information flow between BSs and BSC to the summary information on traffic load and radio link quality for each of the spatial sub-sectors as well as it restricts the information flow from BSC to BSs to frequency-time allocation parameters for the individual spatial sub-sectors. The radio resource management for each of the sub-sectors is then handled by each of the BSs in a fully independent manner.

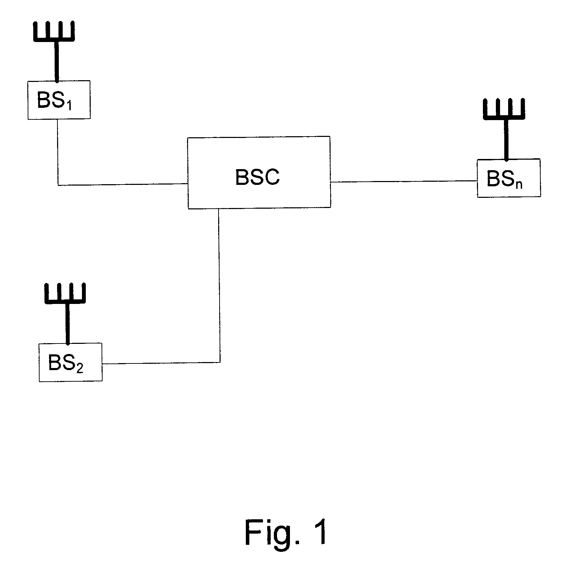

**Fig. 1** shows schematically a radio access network that could be run with the inventive method. The RAN comprises a base station controller BSC, which is linked to a plurality of base stations BS₁... BS₃.

Each base station BSₙ (with n: base station index) covers, i.e. provides radio communication to, a corresponding base station area BSAₙ. In each base station area, a plurality of subscriber stations (stationary or mobile) are present at a certain time (not shown).

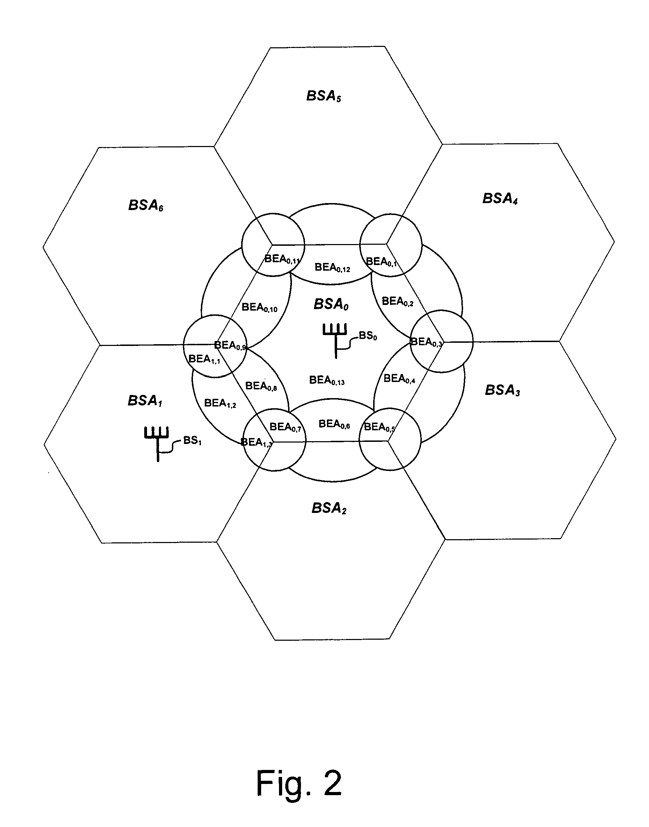

**Fig. 2** shows schematically a subsectorization of an area comprising and surrounding a base station area BSA₀ of a base station BS₀. The BSA₀ is hexagonal in shape, and so are its neighbouring base station areas BSA₁...BSA₆.

BSA₀ is divided into 13 subsectors BEA_{0,0} ... BEA_{0,13}. The other BSAs are similarly built (shown for reasons of simplification only for BSA₁ of BS₁ with the subsectors BEA_{1,1} ... BSA_{1,3} neighbouring BSA₀).

The structure of the subsectors BEA_{n,p} (with p: subsector index) depends on the network deployment structure, the frequency re-use pattern, the used adaptive antenna system and the structure of the BSA. However, it has fixed geometry which is specific for an individual network design, and for the shown network design it is equal for all BSAₙ. The different subsectors have different levels of interference distortions depending on their location within the BSA. A subsector located directly at the border to a neighbour BSA suffers from a higher level of interference due to the transmission signals of the neighbour BS than a subsector located in the middle of the BSA.

BEAs located directly at the border to a neighbour BSA need a high degree of coordination with the neighbour BS to reduce the level of interference distortions due to the transmission signals of the neighbour BS.

Each BSₙ prepares periodically (e.g. every k time frames) a list LIST_{n,p} for each of its BEA_{n,p} and transmits it to the BSC. LIST_{n,p} contains the actual traffic parameters of the actual active connections inside this BEA_{n,p.} Each LIST_{n,p} contains parameters for each scheduling class: e.g. the sum of reserved bit rates, the sum of mean used bit rates, etc. Each of these values shall be calculated taking into account the actual burst profiles (modulation and coding) used for the individual connections in this BEA_{n,p}. By this means, the size of the downlink burst allocation regions BRSTA_DL_{n,p} and the uplink burst allocation regions BRSTA_UL_{n,p} required for the individual subsectors BEA_{n,p} can be calculated.

The BSₙ transmits data to the SSs located in BEAₙ,p using one or more bursts BRST_DL_{n,p} which are located in region BRSTA_DL_{n,p} and receives data from the SSs located in BEA_{n,p} using one or more bursts BRST_UL_{n,p} which are located in region BRSTA_UL_{n,p}

The BSC collects all the lists LIST_{n,p} from all the subsectors BEA_{n,p} of all the base stations BSₙ (n=1,...,N; p=1,...,P) and periodically performs interference coordination to minimize the interferences in the BEAs by calculating the size and position in time and frequency for all the downlink burst allocation regions BRSTA_DL_{n,p} and the uplink burst allocation regions BRSTA_UL_{n,p} for the next k frames until new lists arrive in the BSC.

The interferences in the BEAs can be minimized by coordinating the base stations in that way, that they do not transmit downlink data to adjacent BEAs at the same time, or to use different subchannels when transmitting to adjacent BEAs at the same time, etc. The result of these calculations are the downlink burst allocation regions BRSTA_DL_{n,p}.

The same procedure shall also be performed for the uplink transmission, i.e. subscriber stations in adjacent BEAs shall not transmit uplink data to the BSs at the same time, or shall use different subchannels when transmitting to the BSs at the same time, etc. The result of this calculations are the uplink burst allocation regions BRSTA_UL_{n,p}.

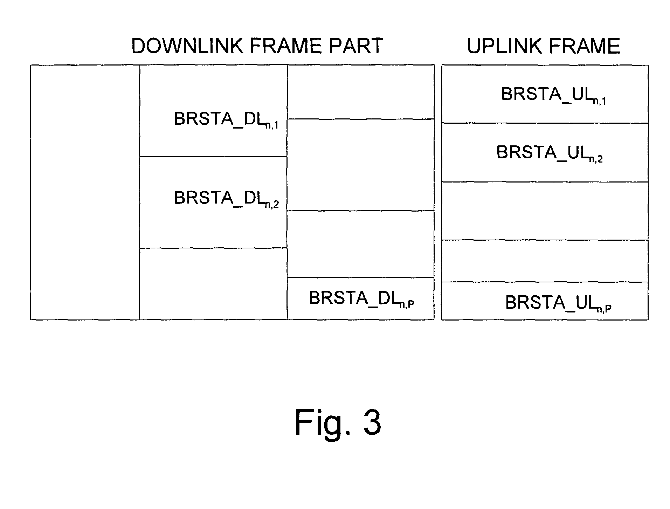

Fig. 3 shows a TDD (time division duplex) frame containing BRSTA_DL and BRSTA_UL, in accordance with the invention.

## Claims

1. Method for operating a radio access network (RAN),
wherein the RAN comprises a plurality of base stations (BS) and a base station controller (BSC),
wherein the BSC allocates radio resources (space, time, frequency, energy) of a resource domain,
and wherein each base station (BS) may handle within a corresponding base station area (BSA) a plurality of subscriber stations (SS),
**characterized in**
**that** each BSA is statically divided into a plurality of spatial subsectors (BEA),
**that** a subset of the time-frequency domain of the resource domain is allocated to each of the subsectors,
**that** the BSs collect traffic information for each subsector belonging to their respective BSA, the traffic information comprising interference conflict scenarios and traffic load,
**that** the BSs summarize the traffic information for each subsector belonging to their respective BSA,
**that** the BSs provide the BSC with said summarized traffic information for each subsector belonging to their respective BSA regularly, in particular periodically,
**that** the BSC analyses the summarized traffic information for each subsector and re-allocates subsets of the time-frequency domain to the subsectors regularly, in particular periodically, in order to minimize interference between BSs,
and **that** each BS comprises an independent local scheduling entity (ILSE) allocating radio resources of a subset of the radio resource domain, allocated to a given subsector at a given instant in time, to SSs within this subsector.

2. Method according to claim 1, **characterized in that** subsets of the time-frequency domain, which are allocated to neighbouring subsectors of different BSAs, do not overlap.

3. Method according to claim 1, **characterized in that** all BSAs have a basically equal geometry, in particular with a hexagonal shape.

4. Method according to claim 3, **characterized in that** all BSAs have substantially a geometrically equal division in subsectors.

5. Method according to claim 1, **characterized in that** a BSA comprises a central subsector and a number N of outer subsectors, with N being at least as large as double the number of other BSAs having a common borderline with the BSA.

6. RAN apparatus, comprising a BSC and a plurality of BSs, **characterized in that** the RAN apparatus is adapted to perform a method according to claim 1.

7. RAN apparatus according to claim 6, **characterized in that** each BS comprises a plurality of antenna patterns, with each antenna pattern dedicated to address one or several subsectors of the respective BSA of the BS, in particular wherein each antenna pattern is dedicated to address one subsector.

8. RAN apparatus according to claim 6, **characterized in that** each BS comprises an adaptive beamforming system for generating adaptively formed beampatterns, wherein for each beampattern a one-to-one correspondence is defined with one of the subsectors of the BSA.

9. RAN apparatus according to claim 6, wherein each BS operates an OFDMA or FDMA air interface.
